# EUROPEAN PATENT SPECIFICATION

(11) **EP 3 108 755 B1**
(45) Date of publication and mention of the grant of the patent: **09.05.2018**
(21) Application number: 16174141.8
(22) Date of filing: 13.06.2016
(51) Int. Cl.: A23N 17/00, A01K 5/00, E01H 1/05

(54) **MIXER-WAGON FOR ANIMAL FOOD PRODUCTS**
MISCHERWAGEN FÜR TIERFUTTERPRODUKTE
MÉLANGEUSE À VIS POUR PRODUITS ALIMENTAIRES POUR ANIMAUX

(30) Priority: 23.06.2015 IT UB20151615
(43) Date of publication of application: 28.12.2016
(73) Proprietor: Almetech S.N.C. di Lazzarotto Antonio & Emiri Mariano, 35021 Agna (PD) (IT)
(72) Inventor: Emiri, Mariano, 35026 Conselve (PD) (IT)
(74) Representative: Gallo, Luca

(56) References cited:
- EP-A1- 2 710 890
- EP-A2- 0 930 005
- AT-B- 389 339
- DE-U1- 29 909 824
- NL-A- 8 202 293

## Description

### Field of application

The present invention regards a mixer-wagon for animal food products, according to the preamble of the independent claim number 1.

The present mixer-wagon is inserted in the industrial field of production of self-moving or hauled machines which are employed in intensive breeding operations for feeding animals, such as in particular cattle, pigs, goats, sheep, buffalo, etcetera.

More in detail, the present mixer-wagon is adapted to chop and uniformly amalgamate the different ingredients of food products, advantageously weighing such products, and is adapted to distribute the food products in the mangers of the animals.

### State of the art

Intensive (or industrial) breeding generally takes place in stalls that are normally provided with one or more corridors, the animal mangers being arranged along the sides thereof. The mangers are separated from the zone of the stall in which the animals are arranged by a barrier provided with multiple openings, through which the animals can insert their head in order to reach the food products deposited in the mangers.

It is known to use machines, hauled or self-moving, which are driven to advance along the corridors of the stall in order to distribute the food products inside the mangers.

Such machines, termed mixer-wagons in the jargon of the field, normally comprise a support frame abutted against the ground by means of multiple wheels fixed to corresponding axles of the support frame itself. The latter also carries a tank fixed thereto, within which the different components of the food product to be distributed are intended to be introduced, such as fodder, silage fodder, food supplements, etc.

In particular, the mixer-wagon comprises suitable weighing sensors operatively connected to the aforesaid tank and adapted to detect the weight of the food product loaded inside the tank itself.

The mixer-wagon also comprises one or more mixing screws mounted with vertical axis inside the tank, peripherally provided with multiple blades and drivable to rotate in order to chop the components of the food product weighed and loaded inside the tank and in order to mix such components in a uniform manner.

The tank is provided, at the bottom, with an outlet opening closed by a shutter door, which is drivable to be opened in order to unload the feed onto a conveyor belt mounted on the support frame of the mixer-wagon and extended transverse to the advancing direction of the mixer-wagon itself between one flank of the latter and the other.

The conveyor belt is drivable to slide towards one flank or the other of the mixer-wagon in order to distribute the food product in the mangers placed along such flank of the mixer-wagon itself.

The mangers of many stalls generally comprise a lateral band of the stall corridor, arranged along one side of the corridor itself, on which the food product is deposited.

The animals, while eating the food product, usually move part of such food product with the muzzle/snout, moving it away from the manger towards the center of the corridor, without eating it, to a distance such that the animal can no longer reach it.

It is necessary to bring such part of residual food product back into the mangers before executing a distribution of new food product, in a manner such that the animals eat the residual food product before the new food subsequently distributed, in order to prevent the residual food product from deteriorating without being eaten by the animals.

The operations for bringing the residual food product back into the mangers require the intervention of operators with brooms or shovels that manually rearrange the food product in the mangers, involving considerably long operations and the use of numerous operators.

It is also known to use suitable brushing machines which are made to pass along the corridors of the stall before each food product distribution operation in order to push the residual food product in the stalls.

The use of such brushing machines, however, does not significantly reduce the times for feeding the animals (given that it is still necessary to execute specific operations for repositioning the residual food product before distributing the new food product) and also involves considerable expenses for purchasing and maintaining the aforesaid brushing machines.

The patent NL 8202293 describes a vehicle of known type for distributing feed, which comprises a tank containing the feed and connected to a lateral conveyor belt adapted to pick up the feed from the tank and release it along one flank of the vehicle.

The vehicle is also provided, on the front side thereof, with a conveyor device comprising a corrugated belt wound around two rotatable rollers and drivable to slide in order to remove material possibly present in front of the vehicle.

The patent DE 29909824 describes a mixer-wagon of known type comprising a support frame provided with four wheels and carrying a tank mounted thereon for containing the food product to be distributed.

In particular, the mixer-wagon comprises two rotary brushes arranged at the front of the front side of the support frame in order to clean the ground in front of the mixer-wagon during the advancing of the latter.

The findings of known type described in the aforesaid patents NL 8202293 and DE 29909824 are unable to bring back within the mangers the previously-distributed residual food product in an entirely efficient manner.

### Presentation of the invention

Main object of the present invention is therefore to overcome the drawbacks manifested by the solutions of known type, by providing a mixer-wagon for animal food products which allows distributing the food products to the animals in a simple and quick manner, in particular without having to execute further specific operations for repositioning the residual food product in the mangers. Another object of the present invention is to provide a mixer-wagon which is capable of distributing the food product in the mangers in an entirely efficient manner, in particular without wasting the food product itself.

Another object of the present invention is to provide a mixer-wagon that is structurally simple and inexpensive to make.

Another object of the present invention is to provide a mixer-wagon that is entirely functional in operation and reliable in all use conditions.

### Brief description of the drawings

The technical characteristics of the invention, according to the aforesaid objects, are clearly found in the contents of the below-reported claims, and the advantages thereof will be more evident from the following detailed description, made with reference to the enclosed drawings, which represent a merely exemplifying and non-limiting embodiment of the invention, in which:
- figure 1 shows a top perspective view of the mixer-wagon, object of the present invention;
- figure 2 shows a side view of the mixer-wagon, object of the present invention;
- figure 3 shows a front view of the present mixer-wagon, in which the brushing elements are arranged in non-operative configuration;
- figure 4 shows a front view of the present mixer-wagon, in which one of the brushing elements is arranged in operative configuration;
- figure 5 shows a side view of a detail of the present mixer-wagon, relative to the brushing elements;
- figure 6 shows a bottom perspective view of the brushing elements illustrated in figure 5;
- figure 7 shows a top perspective view of the brushing elements illustrated in figure 5.

### Detailed description of a preferred embodiment

With reference to the enclosed drawings, reference number 1 overall indicates an embodiment of the mixer-wagon for animal food products, object of the present invention.

The present mixer-wagon 1 is intended to be advantageously employed in intensive breeding operations in order to mix and distribute a food product to the animals, in particular to beef or milk cattle, pigs, goats, sheep, buffalo etcetera. Such intensive breeding operations are situated in stalls normally provided with one or more corridors, the animal mangers being arranged along the sides thereof.

In particular, the mangers comprise a lateral band of ground of the corridor arranged along the corresponding side of the corridor itself, on which the food product is deposited.

The mangers are separated from the zone of the stall in which the animals are arranged by a barrier provided with multiple openings, through which the animals can insert their head in order to reach the food product deposited on the aforesaid strip of ground of the manger.

The present mixer-wagon 1 is actuated to advance in the corridor of the stall in order to distribute the food product on a ground portion inside the mangers arranged at the sides of the corridor itself, as described in detail hereinbelow.

In accordance with the embodiment illustrated in the enclosed figures, the mixer-wagon 1 comprises a support frame 2, which is extended according to a longitudinal axis X thereof between a front side 3 and a rear side 4 of the mixer-wagon 1, and is extended according to a transverse axis Y thereof, orthogonal to the longitudinal axis X, between two lateral flanks 5 of the mixer-wagon 1 that are substantially parallel to each other.

In addition, the mixer-wagon 1 comprises at least one pair 6, 7 of wheels rotatably constrained to the support frame 2 and intended to be abutted against the ground in order to allow the mixer-wagon 1 itself to proceed forward at least according to an advancement direction Z with the front side 3 of the mixer-wagon 1 that precedes the rear side 4 of the latter.

Preferably, each wheel 6', 7' (which advantageously can be single or twin) is arranged along the corresponding lateral flank 5 of the mixer-wagon 1, delimiting in particular such lateral flank 5 at the ground.

Suitably, the two wheels of each pair 6, 7 are arranged aligned with each other according to a direction parallel to the transverse axis Y of the support frame 2 and are advantageously fixed to a corresponding axle of the support frame 2 itself.

In particular, the two wheels of each pair 6, 7 together delimit the ground size of the mixer-wagon 1 between the two lateral flanks 5 of the mixer-wagon 1.

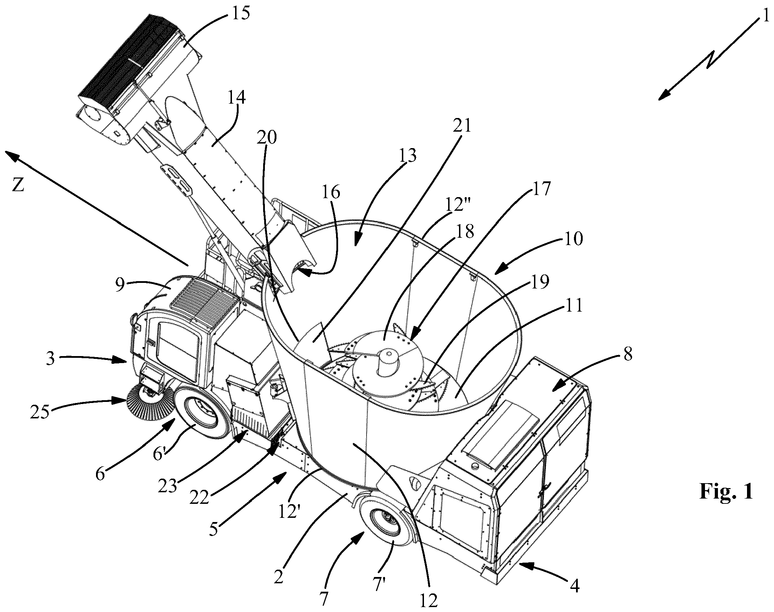

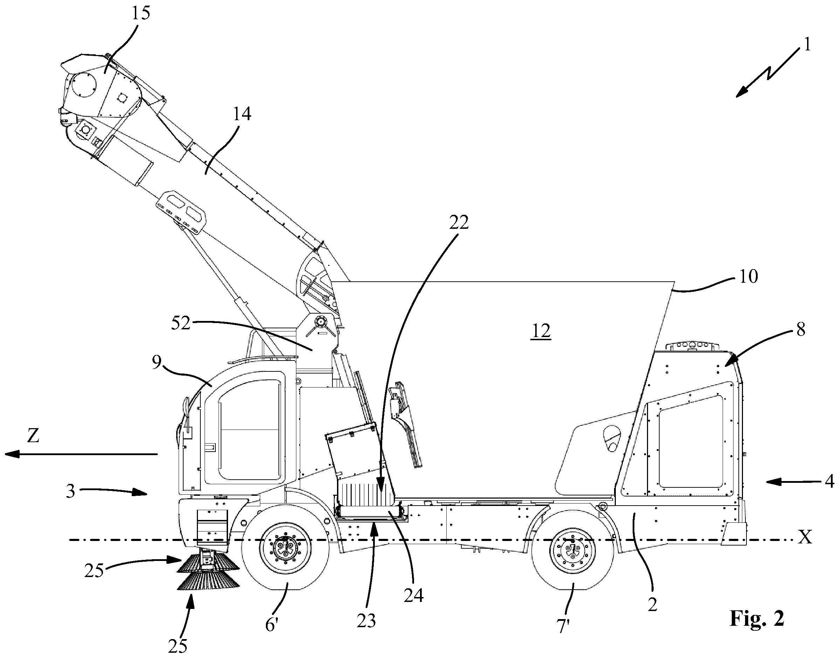

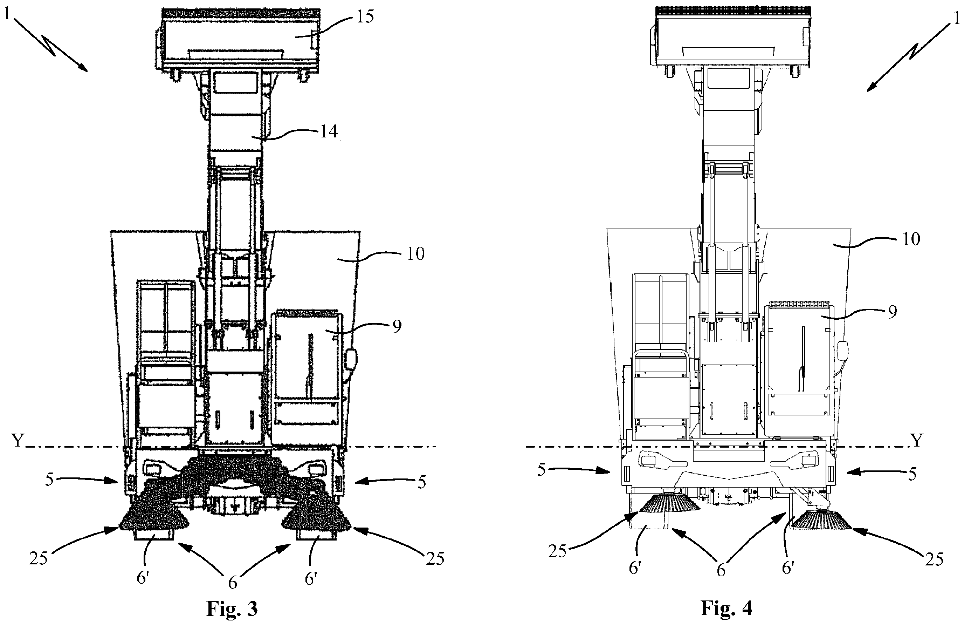

Advantageously, in accordance with the particular embodiment illustrated in figures 1 - 4, the mixer-wagon 1 is provided with two pairs of wheels, including a first pair 6 of front wheels 6', arranged preferably in proximity to the front side 3 of the mixer-wagon 1, and a second pair 7 of rear wheels 7' arranged between the front wheels 6' and the rear side 4 of the mixer-wagon 1.

In accordance with a different embodiment not illustrated in the enclosed figures, the mixer-wagon 1 is provided with a single pair of wheels positioned substantially in an intermediate position between the front side 3 and the rear side 4 of the mixer-wagon 1.

Preferably, according to the embodiment illustrated in figures 1 - 4, the mixer-wagon 1 is of self-moving type and is provided with a motor 8 (e.g. of diesel type) arranged in particular at the rear side 4 of the mixer-wagon 1, and with a drive cab 9 arranged in particular at the front side 3 of the mixer-wagon 1 itself. In accordance with a different embodiment, the mixer-wagon 1 is of hauled type and is intended to advance while drawn by a drive machine (e.g. a tractor) coupled to the front side 3 of the mixer-wagon 1 itself.

According to the invention the mixer-wagon 1 comprises a containment tank 10 mounted on the support frame 2 and intended to house, at its interior, a food product in the form of loose material.

Such food product for example comprises fodder, silage fodder, food supplements, protected fats, vitamins, etc.

Advantageously, the containment tank 10 comprises a bottom wall 11 fixed on the support frame 2 and a lateral wall 12 which is extended between a lower edge 12', fixed to the bottom wall 11, and an upper edge 12" which defines an inlet opening 13 through which the food product is loaded inside the containment tank 10.

Advantageously, the mixer-wagon 1 comprises weighing sensors (not illustrated in the enclosed figures) operatively connected to the aforesaid containment tank 10 and adapted to detect the weight of the food product loaded inside the tank 10 itself.

In particular, the weighing sensors (for example obtained with load cells) are mounted between the support frame 2 of the mixer-wagon 1 and the bottom wall 11 of the containment tank 10, in a manner such to abuttingly receive the latter in order to detect the weight of the food product loaded in the containment tank 10 itself.

Preferably, in accordance with the particular embodiment illustrated in figures 1-4, the mixer-wagon 1 comprises a movable arm 14 (of type *per se* known to the man skilled in the art) which is hinged to a support column 52 fixed (e.g. by means of bolting) to the support frame 2, and is provided with a free end on which a cutter 15 is mounted that is adapted to pick up the food product (or a component of the latter) from a store (for example containing silage fodder). The food product picked up from the cutter 15 is conveyed within a duct made in the movable arm 14 and provided with an outlet mouth 16 arranged above the inlet opening 13 of the containment tank 10 in order to unload the food product within the latter.

The mixer-wagon 1 comprises mixing means 17 arranged inside the containment tank 10 and drivable to move the loose material of the food product to the interior of the containment tank 10 itself in order to mix, and advantageously cut, such loose material.

Preferably, with reference to the embodiment illustrated in figure 1, the aforesaid mixing means 17 comprise at least one screw 18 mounted inside the containment tank 10, positioned with a revolution axis thereof that is vertical and peripherally provided with multiple cutting blades 19.

In operation, the screw 18 is driven to rotate around the revolution axis thereof in a manner such to chop, by means of the aforesaid cutting blades 19, the different components of the food product and in order to uniformly mix such chopped components.

In accordance with a different embodiment not illustrated in the enclosed figures, the mixing means 17 comprise one or more screws with horizontal axis of type *per se* known to the man skilled in the art.

The containment tank 10 is provided with an outlet opening 20, in particular made on the lateral wall 12 of the tank 10 at the lower edge 12' of the lateral wall 12 itself, and is preferably provided with a door 21 (in particular shutter door) drivable to be moved between a closed position, in which the door 21 obstructs the outlet opening 20, and an open position, in which the door 21 at least partially frees the passage of the outlet opening 20 in order to allow the outflow of the food product (chopped and mixed) from the containment tank 10.

The mixer-wagon 1 according to the invention comprises distribution means 22 operatively connected to the outlet opening 20 of the containment tank 10 in order to receive the food product, and provided with at least one dispensing outlet 23 arranged along the corresponding lateral flank 5 of the mixer-wagon 1 in order to dispense the food product on the ground portion of the mangers adjacent to the lateral flank 5 itself.

Advantageously, in accordance with the embodiment illustrated in figures 1-4, the distribution means 22 are provided with two dispensing outlets 23, each of which arranged along the corresponding lateral flank 5 of the mixer-wagon 1.

In particular, still with reference to the embodiment of figures 1-4, the outlet opening 20 of the containment tank 10 is obtained on a front portion of the lateral wall 12 of the tank 10 directed towards the front side 3 of the mixer-wagon 1. The distribution means 22 comprise, advantageously, a conveyor belt 24 arranged at the front of the containment tank 10 and positioned below the outlet opening 20 of the latter in order to receive the food product exiting from the containment tank 10.

In particular, the conveyor belt 24 is extended, parallel to the transverse axis Y of the support frame 2, between two ends thereof which are arranged at corresponding lateral flanks 5 of the mixer-wagon 1 and define the corresponding dispensing outlets 23 of the distribution means 22.

In operation, the conveyor belt 24 is driven to selectively slide towards one of the two lateral flanks 5 of the mixer-wagon 1 or the other in order to carry the food product to the corresponding end of the conveyor belt 24 itself. The food product, when it arrives at the aforesaid end of the conveyor belt 24, is unloaded by the latter in order to be deposited on the underlying ground portion arranged adjacent to the corresponding lateral flank 5 of the mixer-wagon 1.

Advantageously, the mixer-wagon 1 comprises movement means (not illustrated in the enclosed figures) connected to the conveyor belt 24 and drivable to move the latter along the transverse axis Y, in order to arrange the end of the conveyor belt 24, from which the food product is distributed, projecting from the corresponding lateral flank 5 of the mixer-wagon 1, such that for example such end projects about 40-45 cm from the corresponding lateral flank 5.

In accordance with a different embodiment of the present invention not illustrated in the enclosed figures, the outlet opening 20 of the containment tank 10 is obtained on a rear portion of the lateral wall 12 of the tank 10 itself (directed towards the rear side 4 of the mixer-wagon 1) and the conveyor belt 24 is arranged behind the containment tank 10 below the aforesaid outlet opening 20.

In accordance with a further different embodiment of the present invention, the outlet opening 20 is obtained on a longitudinal side of the containment tank 10 arranged along the corresponding lateral flank 5 of the mixer-wagon 1. According to the latter further different embodiment, the distribution means 22 comprise a slide, which is projectingly fixed to the external surface of the lateral wall 12 of the containment tank 10 and is arranged below the outlet opening 20 in order to receive the food product. Such slide is adapted to convey the food product to a free end edge thereof, from which the food product is unloaded onto the underlying ground portion of the mangers. The aforesaid end edge of the slide defines the dispensing outlet 23 of the distribution means 22. Alternatively, in place of the aforesaid slide, a conveyor belt is provided that is mounted on the support frame 2 and movable in order to be arranged below the outlet opening 20 of the containment tank 10, projecting from the corresponding lateral flank 5 of the mixer-wagon 1 with an unloading end that defines the dispensing outlet 23 of the distribution means 22. Such conveyor belt is adapted to receive the food product that exits from the outlet opening 20 and to convey it towards the dispensing end thereof in order to distribute the food product in the mangers.

In accordance with the idea underlying the present invention, the mixer-wagon 1 comprises at least one brushing element 25, which is mechanically connected to the support frame 2, is arranged, at least in an operative configuration thereof, along the corresponding lateral flank 5 of the mixer-wagon 1, and is positioned between the dispensing outlet 23 of the distribution means 22 and the front side 3 of the mixer-wagon 1 itself.

Such brushing element 25 is drivable to operate on the ground portion arranged adjacent to the corresponding lateral flank 5 in order to push a residual part of an old food product (previously deposited on the ground) away from the lateral flank 5 beyond such ground portion, in order to reposition the aforesaid old food product in the mangers in a position such that it can be reached by the animals. More in detail, the aforesaid brushing element is adapted to push towards the mangers the part of the old food product, deposited in the mangers in a preceding distribution operation, which the animals with their muzzle/snout have moved away from the manger (without eating it) to a distance such that they can no longer reach such food.

In particular, the brushing element 25 of the mixer-wagon 1 allows moving the old food product close to the mangers before the distribution means 22 of the same mixer-wagon 1 deposit the new food product coming from the containment tank 10.

Advantageously, the brushing element 25 pushes the old food product into the manger beyond the ground portion in which the distribution means 22 arrange the new food product, in a manner such that the old food product is closer to the animals than the food just distributed and hence is eaten first by the animals themselves.

In this manner, the mixer-wagon 1 provided with the brushing element 25 according to the invention allows correctly repositioning the old food product in the mangers during the course of the new food product distribution operations, in a completely automated manner and without having to previously execute specific operations of repositioning of the old food product.

Advantageously, the mixer-wagon 1 comprises two aforesaid brushing elements 25, each of which arranged along the corresponding lateral flank 5 of the mixer-wagon 1 and drivable in order to operate on the old food product deposited on the ground portion, on which the mixer-wagon 1 deposits the food product by means of the distribution means 22.

Advantageously, the mixer-wagon 1 comprises movement means 26 placed to connect between the support frame 2 and each brushing element 25 and adapted to move each brushing element 25 between a non-operative configuration, in which the brushing element 25 is susceptible to be spaced from the ground, and the aforesaid operative configuration, in which the brushing element 25 is adapted to operate on the ground portion in order to push the old food product in the mangers.

Preferably, the movement means 26 comprise at least one first movement member 27 mechanically connected to each brushing element 25 and adapted to move the latter between a raised position, at the non-operative configuration of the brushing element 25, and a lowered position, at the operative configuration of the brushing element 25 itself.

In particular, in the raised position (non-operative configuration) the brushing element 25 is spaced from the ground, and in the lowered position (operative configuration) the brushing element is brought into contact with the ground portion in order to operate on the old food product.

Preferably, the movement means 26 comprise two aforesaid first movement members 27, each adapted to move the corresponding brushing element 25.

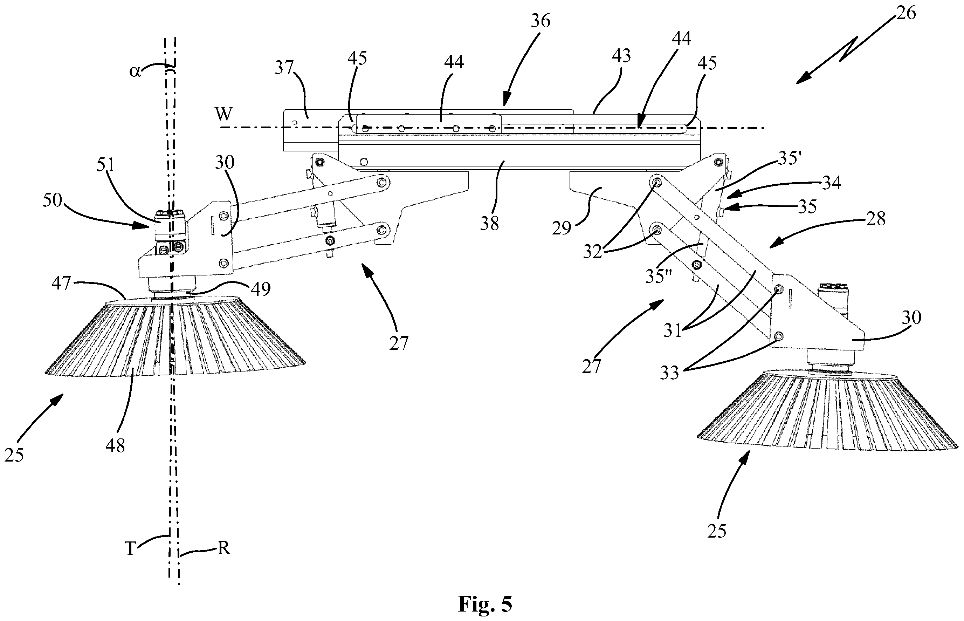

In accordance with the particular embodiment illustrated in figures 5-7, each first movement member 27 comprises an articulated parallelogram 28 provided with a support base 29 mechanically connected to the support frame 2, a movement base 30 carrying the corresponding brushing element 25 mounted thereon, and two arms 31 placed to connect between the support base 29 and the movement base 30 and hinged to the latter by means of corresponding first pins 32 arranged preferably parallel to the longitudinal axis X of the support frame 2. Advantageously, each arm 31 of each articulated parallelogram 28 is extended between a first end thereof, hinged by means of the corresponding first pin 32 to the support base 29, and a second end hinged to the movement base 30 by means of a corresponding second pin 33 parallel to the aforesaid first pin 32.

In particular, the second end of each arm 31 of each first movement member 27 is arranged more forward than the first end towards the exterior of the lateral flank 5 along which the corresponding brushing element 25 is arranged.

Each first movement member 27 also comprises first actuator means 34 mechanically connected to the corresponding articulated parallelogram 28 and drivable for rotating the arms 31 of the latter around the corresponding first pins 32 in order to move the corresponding movement base 30 in a manner such to move the brushing element (mounted on such movement base 30) between the lowered position and the raised position.

More in detail, the arms 31 of each articulated parallelogram 28 are driven by the corresponding first actuator means 34 to rotate in a first rotation direction in order to raise the corresponding movement base 30 (in order to carry the corresponding brushing element 25 into the raised position) and in an opposite rotation direction in order to lower the corresponding movement base 30 (in order to carry the corresponding brushing element 25 into the lowered position). Advantageously, the first actuator means 34 of each first movement member 27 comprise a first linear actuator 35, which is obtained in particular by means of first hydraulic cylinder, and is preferably placed to connect between the support base 29 and one of the first arms 31 of the corresponding articulated parallelogram 28.

In particular, the aforesaid first linear actuator 35 comprises a first jacket 35' hinged to the support base 29 of the corresponding articulated parallelogram 28 and a first stem 35" hinged to one of the arms 31 of the articulated parallelogram 28 itself.

In operation, the first stem 35" of the first linear actuator 35 is driven to be retracted into the first jacket 35' in order to rotate the arms 31 in the first rotation direction, in order to carry the corresponding brushing element 25 into the raised position, and is driven to be extended from the first jacket 35' in order to rotate the arms 31 in the second rotation direction in order to carry the corresponding brushing element 25 into the lowered position.

Advantageously, each brushing element 25, when it is in the operative configuration, at least partially projects from the corresponding lateral flank 5 of the mixer-wagon 1 in a manner such to reach the ground portion arranged adjacent to such lateral flank 5 itself.

In particular, each brushing element 25 (in operative configuration) projects from the corresponding lateral flank 5 according to the transverse axis Y beyond the wheels 6', 7' of the mixer-wagon 1 arranged along such lateral flank 5.

Preferably, the movement means 26 of the mixer-wagon 1 comprise a second movement member 36 mechanically connected to the brushing elements 25, and adapted to move the latter according to a guide direction W substantially parallel to the transverse axis Y of the support frame 2.

More in detail, such second movement member 36 is adapted to move each brushing element 25 between a retreated position (at the non-operative configuration of the brushing element 25) and an advanced position (at the operative configuration of the brushing element 25 itself).

In particular, when the brushing element 25 is in the advanced position (operative configuration), it projects from the corresponding lateral flank 5 of the mixer-wagon 1, and when the brushing element 25 is in the retreated position (non-operative configuration) it is more retracted towards the interior of the bulk of the mixer-wagon 1 between the two lateral flanks 5 of the mixer-wagon 1. Advantageously, the second movement member 36 comprises a support body 37 fixed to the support frame 2 of the mixer-wagon 1 and a slider 38, which is slidably constrained to the support body 37 along the guide direction W and carries the first movement members 27 mounted thereon, which in turn carry the corresponding brushing elements 25 mounted thereon.

In addition, the second movement member comprises second actuator means 39 mounted on the support body 37, mechanically connected to the slider 38 and adapted to move the latter along the guide direction W in order to move the brushing elements 25 between the advanced position and the retreated position.

In particular, the slider 38 is driven by the second actuator means to selectively slide towards one of the lateral flanks 5 of the mixer-wagon 1, in order to bring the brushing element 25 arranged along such lateral flank 5 into the advanced position.

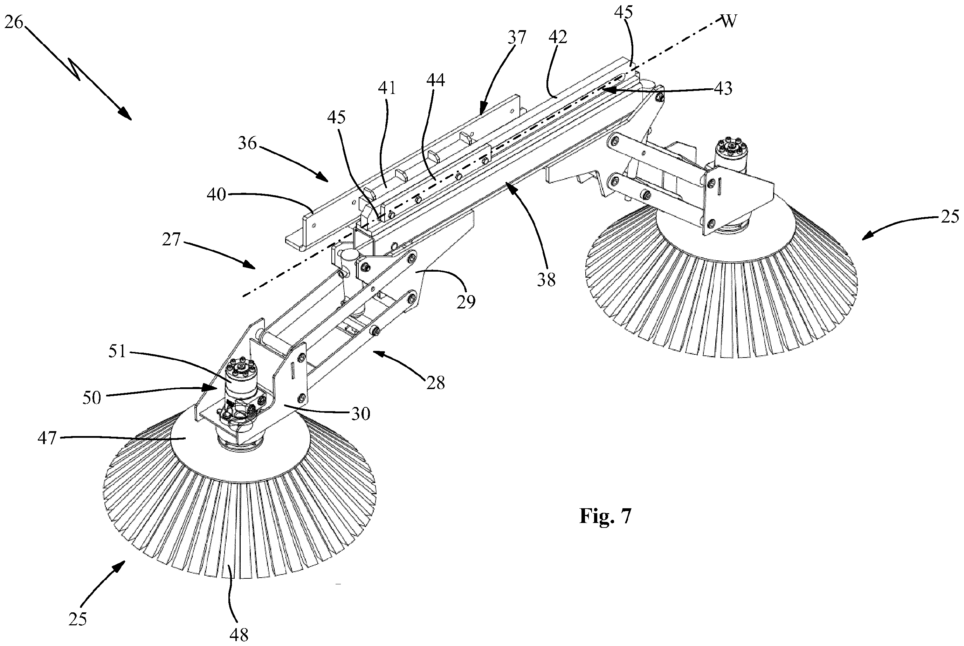

With reference to the embodiment illustrated in figure 7, the support body 37 of the second movement member 36 comprises a fixing bracket 40 secured, preferably by means of bolting, to the support frame 2 of the mixer-wagon 1. In addition, the support body 37 comprises a connection rail 41 projectingly extended from the fixing bracket 40 according to the longitudinal axis X and extended with elongated form according to the transverse axis Y. Such connection rail 41 slidably supports the slider 38 of the second movement member 36.

The slider 38 is extended with elongated form according to the guide direction W, and carries fixed thereto, at opposite end portions thereof, the corresponding first movement members 27, and in particular carries fixed thereto the support bases 29 of the articulated parallelograms 28 of such corresponding first movement members 27.

The slider 38 is also provided with a coupling portion 42 provided with a through groove 43, extended with elongated form along the guide direction W, and within such groove 43 the connection rail 41 of the support body 37 is inserted such that the coupling portion 42 is hung from the connection rail 41 itself.

Preferably, the connection rail 41 of the support body 37 is provided, at a free edge thereof, with a retention flange 44, in a manner such that the coupling portion 42 of the slider 38 is constrained to slide between such retention flange 44 and the fixing bracket 40 of the support body 37.

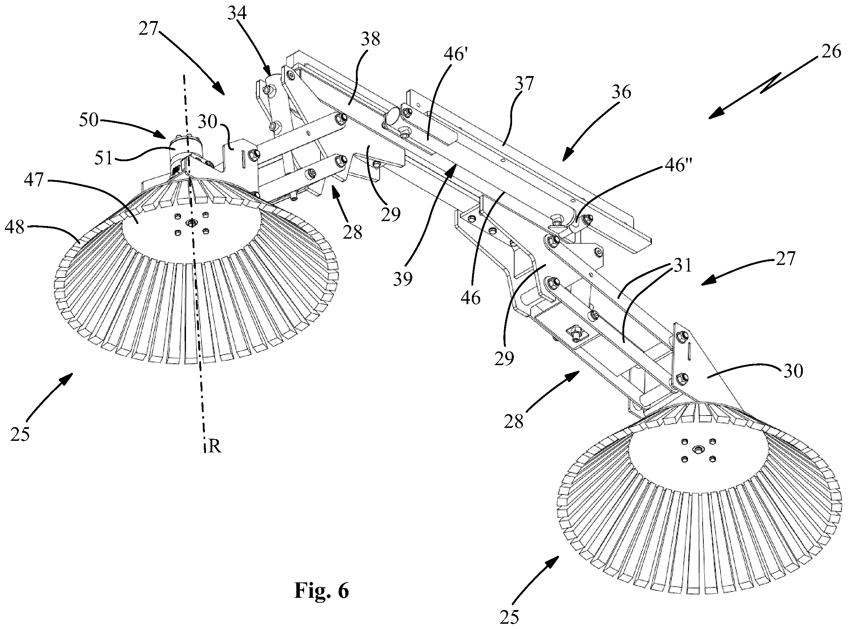

Preferably, the through groove 43 of the coupling portion 42 of the slider 38 is closed at the ends by corresponding end stop portions 45, between which the travel of the slider 38 on the connection rail 41 of the support body 37 is limited. Advantageously, with reference to the embodiment illustrated in figure 6, the second actuator means 39 of the second movement member 36 comprise a second linear actuator 46, which is preferably obtained by means of a second hydraulic cylinder, and is placed to connect between the support body 37 and the slider 38.

In particular, the aforesaid second linear actuator 46 is arranged parallel to the guide direction W and preferably comprises a second jacket 46' connected to the support body 37 and a second stem 46" connected to the slider 38.

In operation, the second stem 46" of the second linear actuator 46 is selectively driven to extend or retract, in order to move the slider 38 selectively towards one of the two lateral flanks 5 of the mixer-wagon 1, so as to carry into the advanced position the brushing element 25 arranged along the selected lateral flank 5. Advantageously, in accordance with the embodiment illustrated in figures 1-4, each brushing element 25 is arranged between the front side 3 of the mixer-wagon 1 and the corresponding front wheel 6' arranged on the corresponding lateral flank 5 of the mixer-wagon 1 itself.

Preferably, the brushing elements 25 are arranged at the front side 3 of the mixer-wagon 1, in particular in front of the corresponding front wheels 6' of the mixer-wagon 1 itself.

In accordance with the particular embodiment illustrated in figures 1-4, the brushing elements 25 are arranged at a front end of the support frame 2 arranged on the front side 3 of the mixer-wagon 1.

In accordance with a different non-illustrated embodiment, the brushing elements 25 are arranged projecting from the front end of the support frame 2. In particular, according to the latter different embodiment, the brushing elements 25 delimit the front side 3 of the mixer-wagon 1.

Advantageously, with reference to the embodiment illustrated in figures 5-7, each brushing element 25 comprises a load-bearing body 47 that is rotatable around a rotation axis R thereof and a plurality of bristles 48 fixed to the load-bearing body 47 and arranged around the rotation axis R of the latter.

In particular, the load-bearing body 47 of each brushing element 25 preferably has discoid form and carries fixed thereto a rotation shaft 49 aligned with the rotation axis R and rotatably constrained with the corresponding first movement member 27 and in particular with the movement base 30 of the articulated parallelogram 28 of the first movement member 27 itself.

The bristles 48 of each brushing element 25 are peripherally fixed to the corresponding load-bearing body 47, are radially extended with respect to the rotation axis R and in particular are tilted downward.

Each brushing element 25 also comprises third actuator means 50 mechanically connected to the load-bearing body 47 and adapted to drive the latter to rotate around the rotation axis R in order to move the corresponding bristles 48 around the rotation axis R itself.

More in detail, advantageously, the third actuator means 50 of each brushing element 25 comprise a motor 51, preferably hydraulic, which is mounted on the movement base 30 of the articulated parallelogram 28 of the corresponding first movement member 27, and is connected to the rotation shaft 49 of the corresponding load-bearing body 47 in order to drive the rotation of the latter. Advantageously, the rotation axis R of each brushing element 25 is tilted (with respect to a direction T orthogonal to the longitudinal and transverse axis X and Y) by a specific angle α preferably comprised between 1° and 4° and in particular equal to about 2°.

In particular, the rotation axis R of the brushing element 25 is tilted such that the part of the bristles 48 which, during the rotation of the brushing element 25, is brought on the corresponding lateral flank 5 of the mixer-wagon 1 is arranged in a lower position than the diametrically opposite part.

In this manner, the bristles 48, when they pass onto the corresponding lateral flank 5 of the mixer-wagon 1, press against the ground where the old food product is deposited, pushing it away from the lateral flank 5.

In operation, an operator driving of the mixer-wagon 1 selects, for example by means of a joystick arranged in the drive cab 9, the lateral flank 5 of the mixer-wagon 1 from which the food product is dispensed.

Following the selection command made by the operator, the movement means 26 move into the operative configuration the brushing element 25 arranged along the selected lateral flank 5 of the mixer-wagon 1.

In particular, the second movement member 36 move such brushing element 25 into the advanced position, and the first movement member 27 associated with such brushing element 25 moves the latter into the lowered position.

Then the operator commands the mixer-wagon 1 to advance in the corridor of the stall with the selected lateral flank 5 directed towards the mangers, and also commands the distribution means 22 to dispense the food product from the dispensing outlet 23 arranged along the aforesaid selected lateral flank 5 of the mixer-wagon 1.

The invention thus described therefore attains the pre-established objects.

## Claims

1. Mixer-wagon (1) for animal food products, which comprises:
- a support frame (2), which is extended according to a longitudinal axis (X) thereof between a front side (3) and a rear side (4) of said mixer-wagon (1), and is extended according to a transverse axis (Y) thereof, orthogonal to said longitudinal axis (X), between two lateral flanks (5) of said mixer-wagon (1) that are substantially parallel to each other;
- at least one pair (6, 7) of wheels rotatably constrained to said support frame (2) and intended to be abutted against the ground in order to allow said mixer-wagon (1) to be moved at least according to an advancement direction (Z) with said front side (3) that precedes said rear side (4);
- a containment tank (10) mounted on said support frame (2) and intended to house, at its interior, at least one food product in the form of loose material;
- mixing means (17) arranged inside said containment tank (10) and drivable to move the loose material of said food product to the interior of said containment tank (10) in order to mix said loose material;
- distribution means (22) operatively connected to an outlet opening (20) of said containment tank (10) in order to receive said food product, and provided with at least one dispensing outlet (23) arranged along a corresponding one of said lateral flanks (5) in order to dispense said food product on a ground portion adjacent to said lateral flank (5);
said mixer-wagon (1) being **characterized in that** it also comprises at least one brushing element (25) mechanically connected to said support frame (2) and arranged, at least in an operative configuration thereof, along said corresponding lateral flank (5) between the dispensing outlet (23) of said distribution means (22) and the front side (3) of said mixer-wagon (1), and drivable to operate on the ground portion adjacent to said corresponding lateral flank (5) in order to push a residual part of an old food product deposited on the ground away from said lateral flank (5) and at least partially beyond said ground portion.

2. Mixer-wagon (1) according to claim 1, **characterized in that** it comprises movement means (26) placed to connect between said support frame (2) and said brushing element (25) and adapted to move said brushing element (25) between a non-operative configuration, in which said brushing element (25) is susceptible to be spaced from said ground portion, and said operative configuration, in which said brushing element (25) is adapted to operate on said ground portion.

3. Mixer-wagon (1) according to claim 2, **characterized in that** said movement means (26) comprise at least one first movement member (27) mechanically connected to said brushing element (25) and adapted to move the latter between a raised position, in said non-operative configuration, and a lowered position, in said operative configuration.

4. Mixer-wagon (1) according to claim 3, **characterized in that** said first movement member (27) comprises:
- an articulated parallelogram (28) provided with a support base (29) mechanically connected to said support frame (2), with a movement base (30) carrying said brushing element (25) mounted thereon, and two arms (31) placed to connect between said support base (29) and said movement base (30) and hinged to the latter by means of corresponding first pins (32);
- first actuator means (34) mechanically connected to said articulated parallelogram (28) and adapted to rotate said arms (31) around said corresponding first pins (32) in order to move said brushing element (25) between said lowered position and said raised position.

5. Mixer-wagon (1) according to any one of the preceding claims, **characterized in that** said brushing element (25), at least in said operative configuration, at least partially projects from the corresponding lateral flank (5) of said mixer-wagon (1).

6. Mixer-wagon (1) according to claim 5 and according to any one of the claims from 2 to 4, **characterized in that** said movement means (26) comprise at least one second movement member (36) mechanically connected to said brushing element (25) and adapted to move said brushing element (25) according to a guide direction (W), substantially parallel to the transverse axis (Y) of said support frame (2), between a retreated position, in said non-operative configuration, and an advanced position, in said operative configuration, in which said brushing element (25) at least partially projects from the corresponding lateral flank (5) of said mixer-wagon (1).

7. Mixer-wagon (1) according to claim 6 and according to claim 3 or 4, **characterized in that** said second movement member (36) comprises:
- a support body (37) fixed to said support frame (2);
- a slider (38) slidably constrained to said support body (37) along said guide direction (W) and carrying said first movement member (27) mounted thereon;
- second actuator means (39) mounted on said support body (37), mechanically connected to said slider (38) and adapted to move said slider (38) along said guide direction (W) in order to move said brushing element (25) between said advanced position and said retreated position.

8. Mixer-wagon (1) according to any one of the preceding claims, which comprises at least two pairs (6, 7) of wheels, including a first pair (6) of front wheels (6') and a second pair (7) of rear wheels (7') placed between said front wheels (6') and the rear side (4) of said mixer-wagon (1);
said mixer-wagon (1) being **characterized in that** said brushing element (25) is arranged between the front side (3) of said mixer-wagon (1) and a corresponding one of said front wheels (6').

9. Mixer-wagon (1) according to any one of the preceding claims, **characterized in that** said brushing element (25) comprises:
- a load-bearing body (47) that is rotatable around a rotation axis (R) thereof;
- a plurality of bristles (48) fixed to said load-bearing body (47) and at least partially arranged around said rotation axis (R);
- third actuator means (50) mechanically connected to said load-bearing body (47) and adapted to drive the latter to rotate around said rotation axis (R).

10. Mixer-wagon (1) according to any one of the preceding claims, **characterized in that** it comprises two said brushing elements (25), each of which arranged along the corresponding lateral flank (5) of said mixer-wagon (1).

## Patentansprüche

1. Mischerwagen (1) für Tierfutterprodukte, der Folgendes umfasst:
- einen Stützrahmen (2), der entlang seiner Längsachse (X) zwischen einer Vorderseite (3) und einer Rückseite (4) des genannten Mischerwagens (1) verläuft, und sich entlang seiner Querachse (Y), rechtwinklig zu der genannten Längsachse (X), zwischen zwei seitlichen Flanken (5) des genannten Mischerwagens (1), die im Wesentlichen zueinander parallel sind, erstreckt;
- mindestens ein drehbar mit dem genannten Stützrahmen (2) verbundenes Paar Räder (6, 7), die dazu bestimmt sind, auf dem Boden aufzuliegen, um es dem genannten Mischerwagen (1) zu gestatten, sich mindestens entlang einer Fahrtrichtung (Z) zu bewegen, wobei die Vorderseite (3) der Rückseite (4) vorausgeht;
- eine auf dem genannten Stützrahmen (2) montierte Aufnahmewanne (10), die dazu bestimmt ist, in ihrem Inneren mindestens ein Futterprodukt in Form von Schüttgut unterzubringen;
- im Inneren der genannten Aufnahmewanne (10) angeordnete Mischvorrichtungen (17), die zum Bewegen des Schüttguts des genannten Futterprodukts im Inneren der genannten Aufnahmewanne (10) betätigt werden können, um das genannte Schüttgut zu mischen;
- operativ an eine Ausgangsöffnung (20) der genannten Aufnahmewanne (10) angeschlossene Verteilungsvorrichtungen (22) zum Aufnehmen des genannten Futterprodukts, die mit mindestens einem entlang einer entsprechenden der genannten seitlichen Flanken (5) angeordneten Ausgabeöffnung (23) ausgestattet sind, um das genannte Futterprodukt auf einem an die genannte seitliche Flanke (5) angrenzenden Bodenabschnitt auszugeben;
wobei der genannte Mischerwagen (1) **dadurch gekennzeichnet ist, dass** er mindestens ein mechanisch mit dem genannten Stützrahmen (2) verbundenes und wenigstens in seiner operativen Konfiguration entlang der genannten entsprechenden seitlichen Flanke (5) zwischen der Ausgabeöffnung (23) der genannten Verteilungsvorrichtungen (22) und der Vorderseite (3) des genannten Mischerwagens (1) angeordnetes Bürstelement (25) weiter umfasst, das betätigt werden kann, um auf den an die genannte entsprechende seitliche Flanke (5) angrenzenden Bodenabschnitt zu wirken, um einen Rückstand eines am Boden von der genannten seitlichen Flanke (5) entfernt und wenigstens teilweise jenseits des genannten Bodenabschnitts abgelagertes altes Futterprodukt zu schieben.

2. Mischerwagen (1) nach Anspruch 1, **dadurch gekennzeichnet, dass** er Bewegungsvorrichtungen (26) als Verbindung zwischen dem genannten Stützrahmen (2) und dem genannten Bürstelement (25) umfasst, die geeignet sind, das genannte Bürstelement (25) zwischen einer nicht operativen Konfiguration, in der das genannte Bürstelement (25) geeignet ist, von dem genannten Bodenabschnitt entfernt zu sein, und der genannten operativen Konfiguration, in der das genannte Bürstelement(25) geeignet ist, auf den genannten Bodenabschnitt einzuwirken, zu verschieben.

3. Mischerwagen (1) nach Anspruch 2, **dadurch gekennzeichnet, dass** die genannten Bewegungsvorrichtungen (26) mindestens ein mechanisch mit dem genannten Bürstelement (25) verbundenes erstes Verschiebungsorgan (27) umfassen, das geeignet ist, dieses Bürstelement zwischen einer erhobenen Position, in der genannten nicht operativen Konfiguration, und einer gesenkten Position, in der genannten operativen Konfiguration, zu verschieben.

4. Mischerwagen (1) nach Anspruch 3, **dadurch gekennzeichnet, dass** das genannte erste Verschiebungsorgan (27) Folgendes umfasst:
- ein mit einer mechanisch an dem genannten Stützrahmen (2) befestigten Stützbasis (29), einer Bewegungsbasis (30), auf der das genannte Bürstelement (25) montiert ist, und zwei als Verbindung zwischen der genannten Stützbasis (29) und der genannten Bewegungsbasis (30) angeordneten und an Letzterer mit entsprechenden ersten Bolzen (32) verankerten Auslegern (31) ausgestattetes Gelenkparallelogramm (28);
- erste mechanisch mit dem genannten Gelenkparallelogramm (28) verbundene Stellantriebelemente (34), die geeignet sind, die genannten Ausleger (31) um die genannten entsprechenden ersten Bolzen (32) in Drehung zu versetzen, um das genannte Bürstelement (25) zwischen der genannten gesenkten Position und der genannten erhobenen Position zu verschieben.

5. Mischerwagen (1) nach irgendeinem der vorangegangenen Ansprüche, **dadurch gekennzeichnet, dass** das genannte Bürstelement (25), wenigstens in der genannten operativen Konfiguration, wenigstens teilweise von der entsprechenden seitlichen Flanke (5) des genannten Mischerwagens (1) vorsteht.

6. Mischerwagen (1) nach Anspruch 5 und nach irgendeinem der Ansprüche 2 bis 4, **dadurch gekennzeichnet, dass** die genannten Bewegungsvorrichtungen (26) mindestens ein zweites mechanisch mit dem genannten Bürstelement (25) verbundenes Verschiebungsorgan (36) umfassen und geeignet sind, das genannte Bürstelement (25) entlang einer im Wesentlichen zu der Querachse (Y) des genannten Stützrahmens (2) parallelen Fahrtrichtung (W) zwischen einer zurückgezogenen Position, in der genannten nicht operativen Konfiguration, und einer vorgeschobenen Position, in der genannten operativen Konfiguration, zu bewegen, in der das genannte Bürstelement (25) wenigstens teilweise von der entsprechenden seitlichen Flanke (5) des genannten Mischerwagens (1) vorsteht.

7. Mischerwagen (1) nach Anspruch 6 und nach Anspruch 3 oder 4, **dadurch gekennzeichnet, dass** das genannte zweite Verschiebungsorgan (36) Folgendes umfasst:
- einen an dem genannten Stützrahmen (2) befestigten Stützkörper (37);
- einen verschiebbar an dem genannten Stützkörper (37) entlang der genannten Fahrtrichtung (W) befestigten Cursor (38), auf dem das genannte erste Verschiebungsorgan (27) montiert ist;
- zweite auf dem genannten Stützkörper (37) montierte Stellantriebelemente (39), die mechanisch mit dem genannten Cursor (38) verbunden und geeignet sind, den genannten Cursor (38) entlang der genannten Fahrtrichtung (W) zu bewegen, um das genannte Bürstelement (25) zwischen der genannten vorgeschobenen Position und der genannten zurückgezogenen Position zu verschieben.

8. Mischerwagen (1) nach irgendeinem der vorangegangenen Ansprüche, der mindestens zwei Paar Räder (6, 7) umfasst, davon ein erstes Paar (6) Vorderräder (6') und ein zweites Paar (7) Hinterräder (7'), die zwischen den genannten Vorderädern (6') und der Rückseite (4) des genannten Mischerwagens (1) positioniert sind;
wobei der genannte Mischerwagen (1) **dadurch gekennzeichnet ist, dass** das genannte Bürstelement (25) zwischen der Vorderseite (3) des genannten Mischerwagens (1) und einem entsprechenden der genannten Vorderräder (6') angeordnet ist.

9. Mischerwagen (1) nach irgendeinem der vorangegangenen Ansprüche, **dadurch gekennzeichnet, dass** das genannte Bürstelement (25) Folgendes umfasst:
- einen um seine Drehachse (R) drehbaren Tragkörper (47);
- eine Vielzahl von an dem genannten Tragkörper (47) befestigten Borsten (48), die mindestens teilweise um die genannte Drehachse (R) angeordnet sind;
- mechanisch mit dem genannten Tragkörper (47) verbundene dritte Stellantriebvorrichtungen (50), die geeignet sind, Letzteren um die genannte Drehachse (R) in Drehung zu versetzen.

10. Mischerwagen (1) nach irgendeinem der vorangegangenen Ansprüche, **dadurch gekennzeichnet, dass** er zwei genannte Bürstelemente (25) umfasst, von denen jedes entlang der entsprechenden seitlichen Flanke (5) des genannten Mischerwagens (1) angeordnet ist.

## Revendications

1. Chariot mélangeur (1) de produits alimentaires pour animaux, comprenant :
- un châssis de support (2), lequel se développe selon son propre axe longitudinal (X) entre un côté avant (3) et un côté arrière (4) dudit chariot mélangeur (1), et s'étend selon son propre axe transversal (Y), orthogonal audit axe longitudinal (X), entre deux flancs latéraux (5) dudit chariot mélangeur (1) sensiblement parallèles entre eux ;
- au moins un couple (6, 7) de roues assujetties de façon pivotante audit châssis de support (2) et destinées à être posées sur le sol pour consentir audit chariot mélangeur (1) d'évoluer au moins selon un sens d'avancement (Z) avec ledit côté avant (3) qui précède ledit côté arrière (4) ;
- une cuve de confinement (10) assemblée sur ledit châssis de support (2) et destinée à loger à son intérieur au moins un produit alimentaire sous forme de matériel incohérent ;
- de moyens de mélange (17) agencés à l'intérieur de ladite cuve de confinement (10) et actionnables pour manutentionner le matériel incohérent dudit produit alimentaire à l'intérieur de ladite cuve de confinement (10) pour mélanger ledit matériel incohérent ;
- de moyens de distribution (22) activement reliés à une ouverture de sortie (20) de ladite cuve di confinement (10) pour recevoir ledit produit alimentaire, et équipés d'au moins un clapet de distribution (23) agencé le long d'un correspondant desdits flancs latéraux (5) pour fournir ledit produit alimentaire sur une portion de sol adjacente audit flanc latéral (5) ;
ledit chariot mélangeur (1) étant **caractérisé en ce qu'**il comprend de plus au moins un élément de brossage (25) mécaniquement relié audit châssis de support (2) et agencé, au moins dans une configuration opérationnelle, le long dudit flanc latéral (5) correspondant entre le clapet de distribution (23) desdits moyens de distribution (22) et le côté antérieur (3) dudit chariot mélangeur (1), et actionnable pour agir sur la portion de sol agencée adjacente audit flanc latéral correspondant (5) pour pousser une partie résiduelle d'un vieux produit alimentaire déposé sur le sol en éloignement dudit flanc latéral (5) et au moins partiellement au-delà de ladite portion de sol.

2. Chariot mélangeur (1) selon la revendication 1, **caractérisé en ce qu'**il comprend de moyens de manutention (26) placés en guise de liaison entre ledit châssis de support (2) et le dit élément de brossage (25) et aptes à déplacer ledit élément de brossage (25) entre une configuration non opérationnelle, dans laquelle ledit élément de brossage (25) est susceptible d'être écarté de ladite portion de sol, et ladite configuration opérationnelle, dans laquelle ledit élément de brossage (25) est apte à agir sur ladite portion de sol.

3. Chariot mélangeur (1) selon la revendication 2, **caractérisé en ce que** lesdits moyens de manutention (26) comprennent au moins un premier organe de déplacement (27) mécaniquement relié audit élément de brossage (25) et apte à déplacer ce dernier entre une position soulevée, dans ladite configuration non opérationnelle, et une position baissée, dans ladite configuration opérationnelle.

4. Chariot mélangeur (1) selon la revendication 3, **caractérisé en ce que** ledit premier organe de déplacement (27) comprend :
- un parallélogramme articulé (28) équipé d'une base de soutien (29) mécaniquement reliée audit châssis de support (2), d'une base de manutention (30) qui porte assemblé ledit élément de brossage (25), et deux bras (31) placés comme liaison entre ladite base de soutien (29) et ladite base de manutention (30) et articulés à cette dernière grâce à de premiers pivots (32) correspondants ;
- de premiers moyens actionneurs (34) mécaniquement reliés audit parallélogramme articulé (28) et aptes à amener en rotation lesdits bras (31) tout autour desdits premiers pivots (32) correspondants pour déplacer ledit élément de brossage (25) entre ladite position baissée et ladite position soulevée.

5. Chariot mélangeur (1) selon l'une quelconque des revendications précédentes, **caractérisé en ce que** ledit élément de brossage (25), au moins dans ladite configuration opérationnelle, vient en saillie au moins partiellement à partir du flanc latéral (5) correspondant dudit chariot mélangeur (1).

6. Chariot mélangeur (1) selon la revendication 5 et selon l'une quelconque des revendications 2 à 4, **caractérisé en ce que** lesdits moyens de manutention (26) comprennent au moins un deuxième organe de déplacement (36) mécaniquement relié audit élément de brossage (25) et aptes à manutentionner ledit élément de brossage (25) selon une direction de conduite (W), sensiblement parallèle à l'axe transversal (Y) dudit châssis de support (2), entre une position rétractée, dans ladite configuration non opérationnelle, et une position avancée, dans ladite configuration opérationnelle, dans laquelle ledit élément de brossage (25) vient en saillie au moins partiellement à partir du flanc latéral correspondant (5) dudit chariot mélangeur (1).

7. Chariot mélangeur (1) selon la revendication 6 et selon la revendication 3 ou 4, **caractérisé en ce que** ledit deuxième organe de déplacement (36) comprend :
- un corps de soutien (37) fixé audit châssis de support (2) :
- un curseur (38) assujetti de manière fluide audit corps de soutien (37) le long de ladite direction de conduite (W) et qui porte assemblé ledit premier organe de déplacement (27) ;
- de deuxièmes moyens actionneurs (39) assemblés sur ledit corps de soutien (37), reliés mécaniquement audit curseur (38) et aptes à manutentionner ledit curseur (38) le long de ladite direction de conduite (W) pour déplacer ledit élément de brossage (25) entre ladite position avancée et ladite position rétractée.

8. Chariot mélangeur (1) selon l'une quelconque des revendications précédentes, lequel comprend au moins deux couples (6, 7) de roues, dont un premier couple (6) de roues avant (6') et un deuxième couple (7) de roues arrière (7') placées entre lesdites roues avant (6') et le côté arrière (4) dudit chariot mélangeur (1) ;
ledit chariot mélangeur (1) étant **caractérisé en ce que** ledit élément de brossage (25) est agencé entre le côté avant (3) dudit chariot mélangeur (1) et l'une correspondante desdites roues avant (6') correspondante.

9. Chariot mélangeur (1) selon l'une quelconque des revendications précédentes, **caractérisé en ce que** ledit élément de brossage (25) comprend :
- un corps porteur (47) pivotant tout autour de son axe de rotation (R) ;
- une pluralité de poils (48) fixés audit corps porteur (47) et agencés au moins partiellement tout autours dudit axe de rotation (R) :
- de troisièmes moyens actionneurs (50) reliés mécaniquement audit corps porteur (47) et aptes à actionner ce dernier à pivoter tout autour dudit axe de rotation (R).

10. Chariot mélangeur (1) selon l'une quelconque des revendications précédentes, **caractérisé en ce qu'**il comprend deux desdits éléments de brossage (25), chacun desquels est agencé le long du flanc latéral (5) correspondant du dit chariot mélangeur (1).
